Europäisches Patentamt

European Patent Office

Office européen des brevets

(19)

(11) Veröffentlichungsnummer: **0 208 021 B1**

# EUROPÄISCHE PATENTSCHRIFT

(12)

(45) Veröffentlichungstag der Patentschrift: 22.05.91

(51) Int. Cl.⁵: **H04L 12/46, H04L 5/16**

(21) Anmeldenummer: **85116249.5**

(22) Anmeldetag: **19.12.85**

(54) **TDMA-Punkt- zu Mehrpunkt-Kommunikationssystem.**

(30) Priorität: 10.08.85 DE 3528767
02.07.85 US 751241

(43) Veröffentlichungstag der Anmeldung:
14.01.87 Patentblatt 87/03

(45) Bekanntmachung des Hinweises auf die
Patenterteilung:
22.05.91 Patentblatt 91/21

(84) Benannte Vertragsstaaten:
**AT DE FR GB IT**

(56) Entgegenhaltungen:
**EP-A- 0 121 410**

**CONFERENCE EUROPEENNE SUR LES
COMMUNICATIONS OPTIQUES, Cannes,
21.-24. September 1982, Seiten 553-558; K.
OSHIMA et al.: "Fibre optic TDMA system for
passive local networks"**

**COMPCON SPRING '82, San Francisco,
22.-25. Februar 1982, Seiten 182-186, IEEE,
New York, US; I. KONG et al.: "Cablenet: A
local area network reservation scheme"**

(73) Patentinhaber: **ANT Nachrichtentechnik GmbH
Gerberstrasse 33
W-7150 Backnang(DE)**

(72) Erfinder: **Sperlich, Josef, Dipl.-Ing.
Kelterweg 52
W-7150 Backnang(DE)**

## Beschreibung

Die Erfindung betrifft ein Kommunikationssystem gemäß dem Oberbegriff des Patentanspruchs 1. Ein solches System wurde in der EP-Anmeldung 85 104 922.1 (EP-A1-0166892, veröffentlicht am 08.01.86 vorgeschlagen.

Das Kommunikationssystem gemäß EP 85 104 922.1 ist so gestaltet, daß zwischen den Sende- und Empfangszyklen bei der Zentralstation möglichst kurze Pausen auftreten.

Aufgabe der Erfindung ist es dieses Kommunikationssystem so weiterzubilden, daß ein einfacher und störungsfreier Betriebsablauf unabhängig von der Zahl der angeschlossenen Unterstationen möglich ist.

Diese Aufgabe wird durch die kennzeichnenden Merkmale des Patentanspruchs 1 gelöst. Die abhängigen Ansprüche zeigen vorteilhafte Ausgestaltungen auf.

Das Kommunikationssystem nach der Erfindung ist für die Funkübertragung oder die kabelgebundene Nachrichtenübertragung mittels Kupferkabeln oder Lichtwellenleitern geeignet.

Anhand der Zeichnungen wird die Erfindung nun näher erläutert. Es zeigen:

Fig. 1   den Aufbau der Zentralstation und einer Unterstation und

Fig. 2   den Rahmenaufbau.

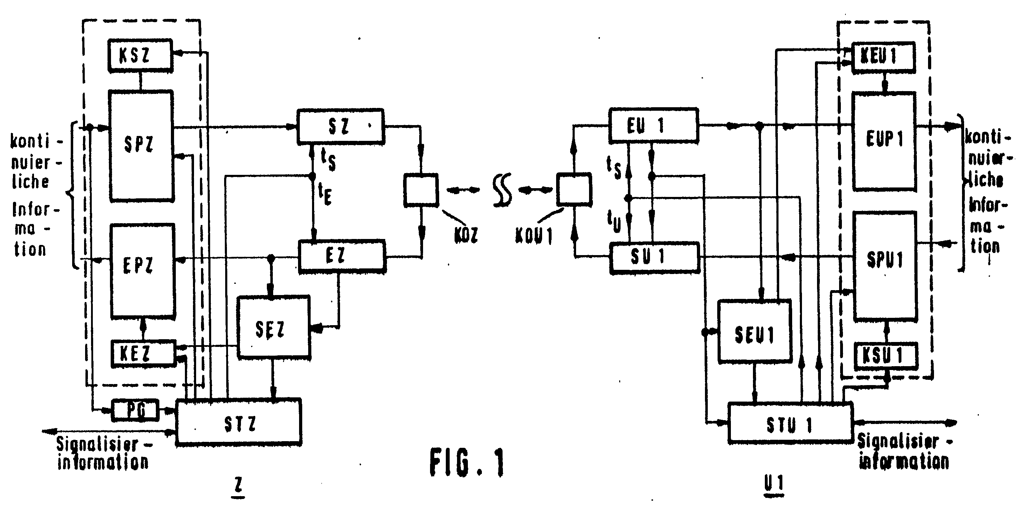

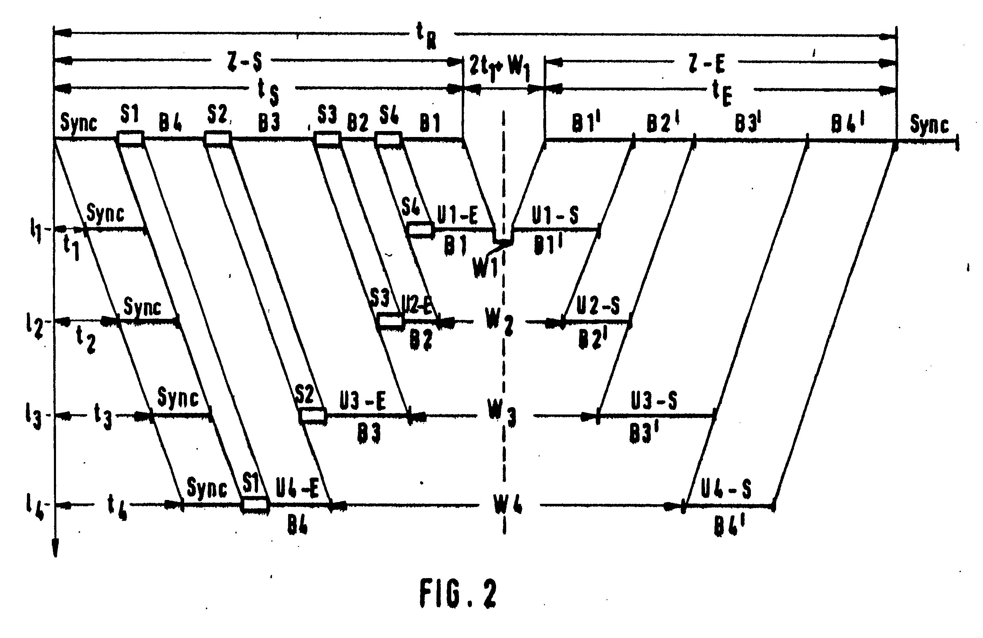

Bei dem Punkt- zu Mehrpunkt-Kommunikationssystem nach der Erfindung steht eine Zentralstation Z mit mehreren Unterstationen U1, U2, ... entweder über Funk oder Kabel, wobei für die Kabelverbindung Kupferkabel oder Lichtwellenleiter zur Informationsübertragung eingesetzt werden können, in Verbindung. In Fig. 1 ist die Zentralstation Z und eine der Unterstationen U1 dargestellt. Die Kommunikation erfolgt nach dem TDMA-Verfahren mit einem Rahmenaufbau gemäß dem Hauptpatent, wie dies in Fig. 2 dargestellt ist.

Die Zentralstation Z sendet die Bursts in folgender Reihenfolge an die Unterstationen U1 bis U4: Nach einem Synchronwort Sync wird der Burst B4 für die von der Zentralstation Z am entferntesten liegende Unterstation U4 ausgesendet. Der Burst B4 wird dabei von einem Synchroncharakter S1 eingeleitet, der die Information über die Wartezeit $W_4$ der Station U4 zwischen ihrer Empfangs- und Sendezeit enthält. Dieser Burst B4 trifft zusammen mit dem Synchronwort Sync bei der Unterstation U4 nach der Laufzeit $t_4$ ein. $l_4$ bezeichnet die Entfernung zwischen Zentralstation Z und der Unterstation U4. An den Burst B4 schließt sich nun der Burst B3 für die bezüglich der Zentralstation Z am zweitentferntesten (Entfernung $l_3$) gelegene Unterstation U3 an, wobei dieser Burst B3 wieder durch ein Synchroncharakter S2 eingeleitet wird, welcher die Wartezeit $W_3$ für diese Station bezüglich ihres Sendebeginns enthält. Der Burst B3 trifft nach der Zeit $t_3$ bei der Unterstation U3 ein. Die Aneinanderreihung der Bursts setzt sich fort bis zum Burst B1 für die der Zentralstation Z nächstgelegene Unterstation U1. Der Sendeabschnitt $t_s$ der Zentralstation Z innerhalb des TDMA-Rahmens mit der Dauer $t_R$ ist damit beendet. Nach Eintreffen des Bursts B1 bei der Unterstation U1 beginnt nun diese der Zentralstation Z nächstgelegene Unterstation U1 mit der Aussendung eines Bursts B1' zur Zentralstation Z. Dies geschieht jedoch erst nach Verstreichen der Wartezeit $W_1$. Diese Wartezeit $W_1$ berücksichtigt insbesondere die Umschaltzeit vom Empfangs- auf Sendebetrieb bezüglich der Unterstation U1. Die weiteren Unterstationen U2 bis U4 senden ihre Bursts B2' bis B4' nach jeweiligen Wartezeiten $W_2$ bis $W_4$n des bezüglich ihrer Empfangsbursts B4 bis B2 und zwar zuerst die der Zentralstation Z nächstgelegenen Unterstationen und zuletzt die von der Zentralstation Z am weitesten entfernt gelegene Unterstation U4. Die unterschiedlichen Wartezeiten $W_1$ bis $W_4$ werden von der Zentralstation Z vorgegeben und den Unterstationen Un entweder, wie in Fig. 2 dargestellt, zu Beginn der jeweiligen Bursts als Synchroncharakter S1 ... S4 stationsindividuell mitgeteilt oder im Synchronwort Sync des von der Zentralstation Z gesendeten Rahmens $t_s$. Diese Wartezeiten $W_1$ bis $W_4$ richten sich nicht nur nach der Laufzeit einer spezifischen Unterstation zur Zentrale, sondern hängen auch von den Burstzeiten der anderen Stationen ab, die von der Zentralstation Z je nach Übertragungsbedarf zu den einzelnen Unterstationen vorgegeben werden. Die Wartezeiten $W_1$ bis $W_4$ werden so gewählt, daß die von den Unterstationen U1 bis U4 ausgesendeten Bursts B1' bis B4' sich beim Empfang durch die Zentralstation Z während deren Empfangszeit $t_E$ nahtlos aneinanderreihen. Zwischen der Sendedauer $t_s$ und der Empfangsdauer $t_E$ der Zentralstation Z tritt im Rahmen $t_R$ eine Übergangszeit von $2t_1 + W_1$ auf, wobei $t_1$ durch die Laufzeit des Bursts B1' von der Zentralstation Z zur nächstgelegenen Unterstation U1 vorgegeben ist und $W_1$, wie bereits erwähnt, insbesondere die Sende-/Empfangs-Umschaltzeit der nächstgelegenen Unterstation U1 kennzeichnet. Die Bursts B1' bis B4' enthalten ebenfalls Synchroncharaktere, z.B. S1' bis S4', und ermöglichen dem Empfänger der Zentralstation Z, sich auf die jeweilige Phasenlage des Empfangstaktes des betreffenden Bursts einzustellen.

Im Hinblick auf eine einfache Ausgestaltung einer Auswerteschaltung in der Zentralstation Z ist jeder Burst B1' bis B4' mit einem "Schlußcharakter" versehen, den die Zentralstation Z erkennt und auf den sie das folgende Synchronwort S2' ... S4' zeitlich "heranschiebt". Die "Sync"-Worte folgen im - unveränderten - Rahmenabstand

$t_R$.

Wenigstens das letzte Bit des "Schlußcharakters" und das erste Bit des Synchronwortes (stets vom folgenden Burst einer Unterstation) bilden eine Schutzzeit für jene Fälle, in denen Überlappungen der Bursts, beispielsweise hervorgerufen durch Jitter, geringe Änderungen in den Burstübertragungszeiten oder Toleranzen beim Empfänger oder Sender, auftreten würden. Der Informationsgehalt wird also in diesen Fällen nicht gestört. Andererseits können kleine Lücken zwischen aufeinanderfolgenden Bursts beim Empfänger der Zentralstation Z auftreten. Beide Zustände werden vom Synchronzeichenerkennungsschaltkreis SEZ der Zentralstation Z erkannt und der Steuereinheit STZ zur Änderung der Wartezeiten W1 bis W4 in Fig. 2 um kleine Beträge mitgeteilt.

Die Übertragung erfolgt im Zeitgetrenntlageverfahren, d.h. zur Übertragung der Bursts B1 bis B4 von der Zentralstation Z an die Unterstationen U1 bis U4 als auch für die Sendebursts B1' bis B4' von den Unterstationen U1 bis U4 an die Zentralstation Z wird das gleiche Frequenzband benutzt.

Empfangs- und Sendephasen für die in den meisten Fällen digitale Information wechseln wie beim Halbduplex-Übertragungsmode. Insbesondere im Falle der Sprachübertragung wird die Information, beispielsweise PCM-, DPCM-, Delta-modulierte Sprache, die von einem Teilnehmer kontinuierlich während einer Rahmenzeit $t_R$ eintrifft, in einen sendeseitigen Pufferspeicher SPZ bzw. SPU1 eingelesen und zeitkomprimiert als Teil eines Bursts an der Sender SZ bzw. SU1 weitergegeben. Empfangsseitig gelangen die Burstinformationen zum Empfänger EZ bzw. EU1 und werden in einen empfangsseitigen Pufferspeicher EPZ bzw. EPU1 eingelesen. Die Auslesung dieses Pufferspeichers EPZ bew. EPU1 erfolgt so, daß die burstweise übertragene Information zeitexpandiert und kontinuierlich zum Teilnehmer weitergegeben wird. Zeitkomprimierung sowie Zeitexpandierung der Information kann im einfachsten Falle dadurch erreicht werden, daß der Auslesetakt für den sendeseitigen Pufferspeicher SPZ bzw. SPU1 höher gewählt wird als der Einlesetakt, und beim empfangsseitigen Pufferspeicher EPZ der Einlesetakt höher als der Auslesetakt. Die Steuerung der Pufferspeicher SPZ, EPZ, SPU1, EPU1 erfolgt jeweils durch zugehörige Steuereinrichtungen KSZ, KEZ, KSU1, KEU1, welche wiederum durch eine Steuereinheit STZ bzw. STU1 und einen Synchronzeichenerkennungsschaltkreis SEZ bzw. SEU1 beeinflusst werden.

Die empfangs- und sendeseitigen Pufferspeicher mit ihren zugehörigen Steuereinrichtungen sind aus Mikroprozessoren und Speichern aufgebaut. Die Synchronzeichenerkennungsschaltkreise bestehen aus Schieberegistern, Komparatoren und Zählern. Der Synchronzeichenerkennungsschaltkreis SEZ der Zentralstation Z ist mit dem Empfänger EZ verbunden. Er überwacht das Empfangssignal daraufhin ob Bitmuster der Synchroncharakter eintreffen. Wenn ein solcher Synchroncharakter komplett eingetroffen ist, wird dies an die Steuereinheit STZ gemeldet und durch Abgabe eines Impulses an die Steuereinrichtung KEZ des empfangsseitigen Pufferspeichers EPZ signalisiert. Hierdurch wird das Eintreffen eines Synchron- und/oder "Endcharakters" einschließlich Überlappung oder Lücke erkannt und die Änderung der Wartezeit kann in folgenden Bursts als Teil der Charakter gesendet werden. Über die Steuereinrichtung KEZ wird der Pufferspeicher EPZ informiert, zu welchem Zeitpunkt ein neuer Burst empfangen wurde, damit die eintreffende Information an richtiger Stelle in den Pufferspeicher EPZ eingelesen werden kann.

Die Steuereinheit STZ der Zentralstation Z, die mit Mikroprozessoren und zugehörigen Speichern aufgebaut ist, erfüllt folgende Aufgaben:

- Berechnung der Burstlängen (B1 bis B4 einschließlich der Synchroncharakter S1 bis S4 und Sync Worte gemäß Fig. 2) anhand der Bedürfnisse für die Übertragungskapazität zwischen Zentralstation und jeder Unterstation bis zu jener Grenze, die durch die Rahmendauer $t_R$ und der Bitrate des Systems gegeben ist. Die Bedürfnisse für die Übertragungskapazität richten sich hauptsächlich nach der Zahl der angeschlossenen Schalteinrichtungen oder Terminals (Dateneingabegeräte) oder den Informationen eines Teilnehmers. Die Informationen für die Berechnung der Burstlängen kommen einerseits von den an die Zentralstation Z angeschlossenen Schalteinrichtungen oder Terminals und/oder von ähnlichen an die Unterstationen angeschlossenen Einrichtungen andererseits, wobei die Informationen von den Unterstationen als Teile der Sync Charakter zur Zentralstation Z gesendet werden. Wie bereits erwähnt hängt die Burstlänge von der Zahl der Kanäle ab, die für eine bestimmte Unterstation bereitgestellt werden müssen. Wenn sich der Verkehrsbedarf ändert, kann die Kanalzuweisung für die Unterstationen durch die Steuereinheit STZ der Zentralstation Z geändert werden. Informationen über den Kanalbedarf erhält die Steuereinheit STZ über die Verbindungsleitung für die Signalisierinformation zwischen Steuereinheit STZ und angeschlossenen Schalteinrichtungen oder von einem Teilnehmer. Die Gesamtzahl der für der Übertragung zur Verfügung stehenden Kanäle ist konstant und hängt von der Rahmendauer $t_R$, der Rahmensendezeit $t_S$ und der Rahmenempfangszeit $t_E$ und der Bitrate des Übertragungssystems ab. Diese Bitrate wird vom Impulsgenerator PG festgelegt.

- Berechnung der Wartezeiten für die Unterstationen entsprechend der verschiedenen Längen der Bursts B1 bis B4, bzw. B1' bis B4' und den bekannten Signallaufzeiten $t_1$ bis $t_4$.
- Geringfügige Änderung dieser Berechnung gemäß der vom Synchronzeichenerkennungsschaltkreis SEZ kommenden Information in Abhängigkeit davon, ob eine Lücke zwischen eintreffenden Bursts oder geringfügige Überlappungen zwischen Schluß-Charakter und Sync Charakter des folgenden B'-Bursts auftreten.
- Benachrichtigung der Steuereinrichtungen KSZ und KEZ der Pufferspeicher wie lang die Bursts B1 bis B4 und B1' bis B4' sind und wo sendeseitig Sync und S1 bis S4 - Charakter in den abgehenden Bitstrom eingefügt werden müssen.
- Lieferung der Wartezeit und Signalisierungsinformation an den sendeseitigen Pufferspeicher SPZ, damit die Aussendung an adressierte Unterstation erfolgen kann.
- Aktivierung des Senders SZ während der Rahmensendezeit $t_S$ und des Empfängers EZ während der Rahmenempfangszeit $t_E$.
- Austausch von Signalisierungsinformationen mit der bereits angeschlossenen Schalteinrichtung oder dem Terminal.

Die Steuereinheit SZU1 einer Unterstation, beispielsweise Unterstation U1, erfüllt folgende Aufgaben:

- Berechnung des Startzeitpunktes für die Aussendung des Bursts B1' anhand der Wartezeitinformation und des Eintreffens eines Sync Pulses vom Synchronzeichenerkennungsschaltkreis SEU1.
- Benachrichtigung der Steuereinrichtungen KEU1 und KSU1 der Pufferspeicher wie lang der Burst B1 und B1' ist und Aktivierung des sendeseitigen Pufferspeichers SPU1.
- Aktivierung des Senders SU1 für die Dauer des Bursts B1' und des Empfängers EU1 für die Dauer der Rahmensendezeit $t_S$ der Zentralstation Z.
- Lieferung der Signalisierungsinformation für den sendeseitigen Pufferspeicher SPU1.
- Austausch der Signalisierinformation mit den angeschlossenen Schalteinrichtungen oder Terminals.

Sender und Empfänger der Zentralstation Z sind über einen Koppler KOZ zusammengeschaltet. Für die Funkübertragung ist dieser Koppler KOZ eine Antenne, bei der kabelgebundenen Übertragung ein Kabelverbinder bzw. optischer Koppler. Ebenso weist jede Unterstation einen entsprechenden Koppler auf, beispielsweise die Unterstation U1 den Koppler KOU1.

## Ansprüche

1. TDMA-Punkt- zu Mehrpunkt-Kommunikationssystem mit einer Zentralstation (Z) und mehreren Unterstationen (U1, U2, ...), wobei die für die einzelnen Unterstationen unterschiedlichen Wartezeiten von der Zentralstation (Z) festgelegt und den Unterstationen mitgeteilt werden, mittels Mehrfachausnutzung des Übertragungsbandes und folgendem Rahmenaufbau:
   - die Zentralstation (Z) beginnt mit der Aussendung der Bursts (B1, B2, ...) für die am weitesten entfernte Unterstation und sendet erst am Schluß jeder Rahmensendezeit ($t_S$) den Burst (z.B. B1) für die nächstgelegene Unterstation (U1),
   - die Unterstationen (U1, U2, ...) senden in umgekehrter Richtung, also zuerst die bezüglich der Zentralstation (Z) nächstgelegene und zuletzt die am weitesten entfernte Unterstation und zwar im Anschluß an die Rahmensendezeit ($t_S$) der Zentralstation unter Berücksichtigung der Umschaltzeit zwischen Sende- und Empfangsbetrieb,
   dadurch gekennzeichnet, daß die Zentralstation (Z) und die Unterstationen (U1, U2, ...) folgende Einrichtungen aufweisen:
   - sende- und empfangsseitige Pufferspeicher (SPZ, EPZ, SPU1, EPU1) mit zugehörigen Steuereinrichtungen (KSZ, KEZ, KSU1, KEU1, ...) zur Umwandlung von kontinuierlichen Signalen in Burstsignale und umgekehrt,
   - eine Steuereinheit (STZ) in der Zentralstation (Z) zur Auswertung und Weitergabe der Burstlängeninformation an ihren sendeseitigen Pufferspeicher (SPZ) bzw. dessen Steuereinrichtung (KSZ), zur Festlegung der Wartezeiten der Unterstationen (U1, U2, ...), und zur Mitteilung an welchen Stellen Synchronworte und Informationen über die Wartezeiten der Unterstationen in den Senderahmen eingefügt werden,
   - eine Steuereinheit (STU1, ...) in jeder Unterstation (U1, U2, ...) zur Ermittlung der Anfangszeiten für die jeweilige Burstaussendung und zur Auswertung und Weitergabe der Burstlängeninformation an den sendeseitigen Pufferspeicher (SPU1).

2. Kommunikationssystem nach Anspruch 1, dadurch gekennzeichnet, daß in der Zentralstation (Z) und in den Unterstationen (U1, U2, ...) jeweils Synchronzeichenerkennungsschaltkreise (SEZ, SEU1, ...) für Synchronworte und Burstendcharakter vorgesehen sind, daß diese Zeichenerkennungsschaltkreise (SEZ, SEU1, ...) derart mit den Steuereinrichtungen (KEZ, KEU1, ...) der empfangsseitigen Pufferspeicher (EPZ, EPU1, ...) verbunden sind, daß jede neue Burstinformation korrekt im empfangsseitigen Pufferspeicher (EPZ, EPU1, ...) abgespeichert wird, daß die Synchronzeichenerkennungsschaltkreise (SEZ, SEU1, ...) mit Mitteln zur Extrahierung der Wartezeiten und Signalisierinformationen ausgestattet sind, und daß diese Mittel über die jeweilige Steuereinheit (STZ, STU1, ...) mit den sende-seitigen Pufferspeichern (SPZ, SPU1, ...) zur Aufnahme in die nachfolgend zur Aussendung gelangenden Bursts verbunden sind.

3. Kommunikationssystem nach Anspruch 1 oder 2, dadurch gekennzeichnet, daß die Steuereinheit (STZ) der Zentralstation (Z) die Festlegung der Wartezeiten für die Unterstationen (U1, U2, ...) in Abhängigkeit davon ändert, ob ihr Synchronzeichenerkennungsschaltkreis (SEZ) feststellt, daß eine Lücke zwischen den eintreffenden Bursts oder eine Überlappung zwischen einem Burstendcharakter und dem Synchroncharakter des anschließenden Bursts auftritt.

4. Kommunikationssystem nach einem der Ansprüche 1 bis 3, dadurch gekennzeichnet, daß die Steuereinheit (STZ) der Zentralstation (Z) mit dem zugenorigen Sender (SZ), bzw. Empfänger (EZ), derart verbunden ist, daß der Sender (SZ) nur während der Rahmensendezeit ($t_s$) und der Empfänger (EZ) nur während der Rahmenempfangszeit ($t_E$) aktiviert wird, und daß die Steuereinheit (STU1, ...) der Unterstationen (U1, U2, ...) mit dem zugehörigen Sender (SU1, ...) bzw. Empfänger (EU1, ...) derart verbunden ist, daß der Sender (SU1, ...) nur für die Zeit einer Burstaussendung (B1') und der Empfänger (EU1, ...) für die Dauer der Rahmensendezeit ($t_s$) aktiviert wird.

5. Kommunikationssystem nach einem der Ansprüche 1 bis 4, dadurch gekennzeichnet, daß die Steuereinheiten (STZ, STU, ...) von Zentralstation (Z) und/oder Unterstationen (U1, ...) über Signalisierwege mit Dateneingabegeräten zur Festlegung des Kanalbedarfs und damit der Burstlängen (B1, ...) verbunden sind.

## Claims

1. TDMA point-to-multipoint communications systems with a central station (Z) and several substations (U1, U2,...), wherein the different delay times for the individual substations are fixed by the central station (Z) and communicated to the substations, by means of multiple utilisation of the transmission band and following frame format:
   - the central station (Z) begins with the transmission of the bursts (B1, B2,...) for the furthest away substation and transmits the burst (e.g. B1) for the nearest substation (U1) only at the end of each frame transmission time ($t_s$),
   - the substations (U1, U2,...) transmit in reverse order, thus initially the closest substation with respect to the central station (Z) and finally the furthest away substation and indeed in addition to the frame transmission time ($t_s$) of the central station with consideration of the changeover time between transmission and reception operation, characterised thereby that the central station (Z) and the substations (U1, U2,...) exhibit following equipment:
   - buffer stores (SPZ, EPZ, SPU1, EPU1) at the transmission and reception sides with associated control equipment (KSZ, KEZ, KSU1, NEU1,...) for conversion of continuous signals into burst signals and conversely,
   - a control unit (STZ) in the central station (Z) for evaluation and transmission of the burst length information at its buffer store (SPZ) at the transmission side or control equipment (KSZ) thereof, for fixing of the delay times of the substations (U1, U2,...), and for communicating at which positions synchronising words and information about the delay times of the substations are introduced into the transmission frame,
   - a control unit (STU1,...) in each substation (U1, U2,...) for ascertaining the start times for the respective burst transmission and for evaluation and retransmission of the burst length information at the buffer store (SPU1) at the transmission side.

2. Communications system according to claim 1, characterised thereby that respective synchronising mark recognition circuits (SEZ, SEU1,...) for synchronising words and burst end characters are provided in the central station (Z) and in the substations (U1, U2,...), that these mark recognition circuits (SEZ, SEU1,...) are connected with the control equipment (KEZ, KEU1,...) of the buffer stores (KEZ, KEU1,...) at the reception side in such a manner that each new burst information is correctly stored in the buffer store (KEZ, KEU1,...) at the reception side, that the synchronising mark recognition circuits (SEZ, SEU1,...) are equipped with means for extracting the delay times and signaling information, and that these means are connected by way of the respective control unit (STZ, STU1,...) with the buffer stores (SPZ, SPU1,...) at the transmission for picking up bursts occurring subsequently for transmission.

3. Communications system according to claim 1 or 2, characterised thereby that the central unit (STZ) of the central station (Z) changes the ⸀ːing of the delay times for the substations (U1, U2,...) in dependence on whether its synchronising mark recognition circuit (SE2) establishes that a gap arises between the arriving bursts or an overlapping arises between a burst end character and the synchronising character of the following burst.

4. Communications system according to one of the claims 1 to 3, characterised thereby that the control unit (STZ) of the central station (Z) is connected with the associated transmitter (SZ) or receiver (EZ) in such a way that the transmitter (SZ) is activated only during the frame transmission time ($t_s$) and the receiver (EZ) only during the frame reception time ($t_E$), and that the control unit (STU1,...) of the substations (U1, U2,...) is connected with the associated transmitter (SU1,...) or receiver (EU1,...) in such a way that the transmitter (SU1,...) is activated only for the time of a burst transmission (B1') and the receiver (EU1,...) for the duration of the frame transmission time ($t_s$).

5. Communications system according to one of the claims 1 to 4, characterised thereby that the control units (STZ, STU,...) of central station (Z) and/or substations (U1,...) are connected by way signaling paths with data input apparatus for determining the channel requirement and therewith the burst lengths (B1,...).

**Revendications**

1. Système de communication AMRT point-multipoint avec une station centrale (Z) et plusieurs sous-stations (U$_1$, U$_2$...), où des temps d'attente différents sont fixés par la station centrale (Z) pour les différentes sous-stations et communiqués à ces dernières, en utilisant plusieurs fois la bande passante et la structure de trame suivante :

- la station centrale (Z) commence par émettre les rafales (B$_1$, B$_2$...) des sous-stations les plus éloignées et n'émet qu'à la fin de l'intervalle d'émission de la trame ($t_s$) la rafale (par exemple B$_1$) de la sous-station la plus proche (U$_1$),
- les sous-stations (U$_1$, U$_2$...) émettent dans l'autre sens, donc d'abord les sous-stations les plus proches de la station centrale (Z) et enfin les plus éloignées, immédiatement après l'intervalle d'émission de la trame ($t_s$) de la station centrale, en tenant compte du temps de commutation entre le mode d'émission et le mode de réception,
caractérisé en ce que la station centrale (Z) et les sous-stations (U$_1$, U$_2$...) possèdent les dispositifs suivants :
- mémoire tampon d'émission et de réception (SPZ, EPZ, SPU$_1$, EPU$_1$) avec les dispositifs de commande correspondants (KSZ, KEZ, KSU$_1$, KEU$_1$...) afin de transformer les signaux continus en signaux en rafale, et inversement,
- une unité de commande (STZ) de la station centrale (Z) pour l'analyse et la transmission de l'information de longueur de rafale à sa mémoire tampon d'émission (SPZ) ou à son dispositif de commande (KSZ), pour fixer les temps d'attente des sous-stations (U$_1$, U$_2$...) et pour déterminer les endroits où les mots de synchronisation et les informations sur les temps d'attente des sous-stations doivent être insérés dans la trame émise,
- une unité de commande (STU$_1$...) dans chacune des sous-stations (U$_1$, U$_2$...) pour déterminer le début de l'émission de la trame et pour analyser et transmettre les informations de longueur de rafale aux mémoires tampons d'émission (SPU$_1$).

2. Système de communication selon la revendication 1, caractérisé en ce que la station centrale (Z) et les sous-stations (U$_1$, U$_2$...) possèdent des circuits de détection des caractères de synchronisation (SEZ, SEU$_1$...) pour les mots de synchronisation et les caractères de fin de rafale, en ce que ces circuits de détection des caractères de synchronisation (SEZ, SEU₁...) sont reliés aux dispositifs de commande (KEZ, KEU₁...) des mémoires tampons de réception (EPZ, EPU₁...) de telle manière que les informations de chaque nouvelle rafale sont correctement transcrites dans la mémoire tampon de réception (EPZ, EPU₁...), en ce que les circuits de détection des caractères de synchronisation (SEZ, SEU₁...) sont dotés de moyens pour extraire les temps d'attente et les informations de signalisation et en ce que ces moyens sont reliés par l'unité de commande (STZ, STU₁....) aux mémoires tampons d'émission (SPZ, SPU₁...) pour le stockage dans la rafale suivante à émettre.

3. Système de communication selon la revendication 1 ou 2, caractérisé en ce que l'unité de commande (STZ) de la station centrale (Z) modifie les temps d'attente des sous-stations (U₁, U₂...) en fonction des constatations faites par le circuit de détection des caractères de synchronisation (SEZ), à savoir l'existence d'une lacune entre les rafales reçues ou d'une superposition entre le caractère de fin d'une rafale et le caractère de synchronisation de la rafale suivante.

4. Système de communication selon l'une des revendications 1 à 3, caractérisé en ce que l'unité de commande (STZ) de la station centrale (Z) est reliée à l'émetteur (SZ) et au récepteur (EZ) correspondants de telle manière que l'émetteur (SZ) n'est activé que pendant l'intervalle d'émission de la trame ($t_s$) et le récepteur (EZ) que pendant l'intervalle d'émission de la trame ($t_E$), et en ce que l'unité de commande (STU₁...) des sous-stations (U₁, U₂...) est reliée aux émetteurs SU₁...) et aux récepteurs (EU₁...) correspondants de manière à ce que l'émetteur SU₁...) n'est activé que pendant le temps d'émission d'une rafale (B₁') et le récepteur (EU₁...) que pendant la durée de l'intervalle d'émission de la trame ($t_s$).

5. Système de communication selon l'une des revendications 1 à 4, caractérisé en ce que les unités de commande (STZ, STU₁...) de la station centrale (Z) et/ou des sous-stations (U₁...) sont reliées par des canaux de signalisation à des terminaux d'entrée de données afin de déterminer les besoins en canaux et donc les longueurs des rafales (B₁...).

FIG. 1

FIG. 2